# EUROPÄISCHE PATENTANMELDUNG

(11) **EP 2 138 422 A1**
(43) Veröffentlichungstag der Anmeldung: **30.12.2009**
(21) Anmeldenummer: 08450095.8
(22) Anmeldetag: 27.06.2008
(51) Int. Cl.: B65D 77/20, B32B 15/20, B32B 15/08, B32B 27/32, B32B 3/24, B32B 7/06

(54) **Platine zum Verschliessen eines Bechers**

(71) Anmelder: Teich Aktiengesellschaft, 3200 Weinburg (AT)
(72) Erfinder: Kornfeld, Martin, 3400 Klosterneuburg (AT); Nekula, Lambert, 3202 Hofstetten (AT); Wegenberger, Alfred, 3550 Langenlois (AT); Schedl, Adolf, 3200 Obergrafendorf (AT)
(74) Vertreter: Patentanwälte Barger, Piso & Partner

(57) **Zusammenfassung**

Die Erfindung betrifft eine Platine zum Verschließen eines Bechers entlang eines umlaufenden Siegelrandes, wobei die Platine zumindest eine Aluminiumfolie und eine, gegebenenfalls mehrlagige, auf die Aluminiumfolie koextrudierte Kunststoffschichte aufweist, wobei in der Kunststoffschichte eine in sich geschlossene Schwächungslinie vorgesehen ist.

Die Erfindung ist dadurch gekennzeichnet, dass die Kunststoffschichte entweder aus auf Polyethylen (PE) basierendem Kunststoff oder aus auf Polypropylen (PP) basierendem Kunststoff besteht und dass die Schwächungslinie mittels eines CO₂-Lasers in die Kunststoffschichte eingebracht worden ist.

Die Erfindung betrifft weiters ein Verfahren zur Herstellung einer solchen Platine.

## Beschreibung

Die Erfmdung betrifft eine Platine zum Verschließen eines Bechers entlang eines umlaufenden Siegelrandes, wobei die Platine zumindest eine Aluminiumfolie und eine, gegebenenfalls mehrlagige, auf die Aluminiumfolie koextrudierte Kunststoffschichte aufweist und wobei in der Kunststoffschichte eine in sich geschlossene Schwächungslinie vorgesehen ist.

Eine derartige Platine ist beispielsweise aus der EP 0 812 782 A bekannt. Dabei besteht die Kunststoffschichte aus zumindest zwei Lagen, wobei die innerste Lage Einschnitte oder Schwächungslinien nahe des Randes aufweist, die ovale Bereiche begrenzen. Nach dem Aufsiegeln auf einen gefüllten Becher kommt es beim Abziehen der Platine zufolge der vorbestimmten Haftverhältnisse zwischen den einzelnen Schichten und der Siegelstärke am Becherrand dazu, dass die innere Lage der Kunststoffschichte am Behälterrand fest angesiegelt bleibt, dass die äußere Lage der Kunststoffschichte und die Aluminiumfolie abgezogen werden, und dass der ovale Bereich, der durch die Schwächungslinien der innersten Schichte vorgegeben, ist beim Abpeelen auf der äußeren Lage haften bleibt und so eine für einen Trinkhalm oder das Trinken aus dem Becher günstige Öffnung frei gibt.

Die Schaffung des Zusammenhaltes der einzelnen Schichten/Lagen und der Schwächungslinien erfolgt durch Schmelzvorgänge, die durch entsprechend geheizte und profilierte Walzen beim Durchlaufen des Filmes bewirkt werden. Obwohl diese aus dem Jahre 1996 stammende Anmeldung von einem der größten Platinenhersteller Europas stammt, kam der Gegenstand der Anmeldung nie auf den Markt, es war nicht möglich, ihn in kaufmännisch vertretbarer Zeit und zu kaufmännisch vertretbaren Kosten herzustellen.

Aus der EP 1 278 630 B ist eine ähnliche Platine bekannt, die nach dem Öffnen wiederverschließbar sein soll. Dazu ist in gewissen Bereichen der Platinen ein drucksensitiver Klebstoff vorgesehen. Abgesehen von der Wiederverschließbarkeit bestehen verschiedentlich Ähnlichkeiten mit der erstgenannten Druckschrift, wenn auch die Platine wegen des Zieles der Wiederverschließbarkeit mechanisch stabiler ausgeführt ist. Für eine nur einmalige Öffnung ist diese Platine zu aufwendig, auch hat sich bei dieser Konzeption eine Unzuverlässigkeit betreffend die Abtrennung zwischen den Schichten und den Verbleib der Innenschicht im Öffnungsbereich herausgestellt.

Jüngeren Datums ist die AT 501 789 B der Anmelderin, die die gleichen Ziele hat wie die erstgenannte Druckschrift und ebenfalls die Schwächungslinien mittels eines heizbaren Werkzeuges auf thermisch-mechanischem Weg zu schaffen versucht. Auch hier ist eine zuverlässige und kaufmännisch vertretbare Herstellung nicht geglückt.

Eine schon weit zurückliegende, auf dem Jahre 1979 stammende Druckschrift, die DE 29 01 581 A, hat für spezielle Becher mit Rollrand eine Lösung für das Abziehen einer Schicht einer mehrschichtigen Platine mit Ausbildung einer Öffnung im verbleibenden Platinenmaterial gesucht, doch kam auch dieses Produkt nie auf den Markt.

Eine praktisch ebenso alte Druckschrift, die FR 2 503 036 A, schlägt eine ganz ähnliche Lösung vor, nämlich die Koextrusion einer Aluminiumfolie und einer Kunststoffschichte, letztere ist durch Schwächungslinien im vorgegebenen Bereichen vom Verbund abgetrennt und wird beim Abpeelen der Platine an diesen Stellen vom Aluminium mitgenommen, sodass ein Deckel mit Öffnung auch nach dem Öffnen am Rand des Bechers verbleibt.

Noch deutlich später (1987) wurde von der Anmelderin der letztgenannten französischen Druckschrift in den USA eine Verbesserung unter Schutz gestellt, auf den Markt kam trotz des großen patentrechtlichen Aufwandes keines der Produkte.

Eine auf das Jahr 1971 zurückgehende, etwas unterschiedliche Aufgaben betreffende Druckschrift ist die DE 22 40 234 A, die bei einer schalenförmigen Verpackung für Frischfleisch eine zweilagige Abdeckfolie mit dem Behälterrand versiegelt, wobei die äußere Schichte sauerstoffundurchlässig und die innere Schichte sauerstoffdurchlässig ist. Zufolge einer Schwächung der inneren Schichte im Bereich einer Abziehlasche ist es möglich, die äußere Schichte für sich allein abzuziehen und so den Reifeprozess für das Fleisch beginnen zu lassen. Diese Verpackung konnte sich, wenn sie überhaupt je auf dem Markt erschien, nicht durchsetzen.

Die jüngste, wiederum gattungsgemäße, Druckschrift ist die WO 2007/088436 A, die eine ganze Reihe von Varianten der bisher abgehandelten (besonders der zuerst genannten) Druckschriften enthält. Bemerkenswert daran ist, dass die Abhandlungen äußert kursorisch erfolgen, sodass eigentlich nur Ideen vermittelt werden, nicht aber wirklich funktionsfähige Lösungen. Dies zeigt sich schon in einem Vergleich der Fig. 4 mit der zugehörigen Beschreibung, denn die Fig. 4 soll den Fall darstellen, in dem die äußerste Seite der Platine die Schwächungslinien aufweist, was aber bedeutet, dass der schraffierte Teil mit dem Bezugszeichen 24, eben weil dort die äußerste Schichte abgetrennt wird, beim Abziehen nicht die dargestellte Position einnehmen kann.

Es wird weiters im Text ausgeführt, dass die Schwächungslinien auch an der innersten Schichte vorgesehen werden können oder, wenn mehr als zwei Schichten/Lagen vorgesehen sind, auch an Zwischenschichten. Wie dies einerseits bei der Herstellung, andererseits beim Öffnen, funktionieren soll, wird nicht weiter ausgeführt.

Es werden auch für die Herstellung der Schwächungslinien alle nur erdenkbaren Möglichkeiten genannt, ohne dass auch nur eine davon ansatzweise näher beschrieben wird. Es heißt ganz lapidar, dass ein Stanzwerkzeug oder ähnliches, oder ein Laserstrahl verwendet werden kann. Diese Druckschrift ist, wie bereits erwähnt, jüngeren Datums (Priorität 02. Februar 2006) und es ist noch kein dem Inhalt dieser Druckschrift entsprechendes Produkt am Markt erschienen; mit den in der Anmeldung genannten Informationen wird ein solches wohl auch kaum im industriellen Maßstab zu fertigen sein.

Die Anmelderin hat sich mit den Problemen und Lösungsversuchen der genannten Druckschriften seit mehreren Jahren intensiv beschäftigt und ist nunmehr zu einer praktikablen Lösung gekommen, durch die die gewünschten Ziele erreicht und die geschilderten Nachteile vermieden werden.

Erfindungsgemäß geschieht dies dadurch, dass die, gegebenenfalls mehrlagige Kunststoffschichte entweder aus auf Polyethylen (PE) basierendem Kunststoff oder aus auf Polypropylen (PP) basierendem Kunststoff besteht, und dass die Schwächungslinien mittels eines CO₂-Lasers in die Kunststoffschichte eingebracht werden.

Auf diese Weise erreicht man eine auf kleinste Flächen bzw. kleinsten Raum beschränkte Schwächung der Kunststoffschichte, deren Eigenschaften, nach heutigem Wissensstand, auf die so gut wie ausschließlich thermische Belastung des Kunststoffmaterials zurück zu führen ist, wodurch beim Abpeelen die von der Schwächungslinie umgrenzten Gebiete zuverlässig auf der Aluminiumfolie haften bleiben und eine sauber begrenzte Entnahmeöffnung bzw. Trinköffnung von der am Becherrand angesiegelt bleibenden Kunststoffschichte ausgebildet wird.

Die geringen Abmessungen der beeinträchtigten Bereiche und die Beeinträchtigung durch Wärme allein, ohne drückende oder scherende Beanspruchung, somit zumindest im Wesentlichen ohne mechanische Materialdeformation, führen auch dazu, dass trotz der Schwächungslinien der Zutritt von dem im Becher befindlichen Material zur Aluminiumschicht nicht stattfindet. Dies ist insbesondere bei Lebensmitteln mit merklichem Anteil an Fruchtsäuren von Bedeutung, da diese zu einer lokalen Verfärbung des Aluminiums führen könnten, was aus optischen Gründen unerwünscht ist.

Im Folgenden werden die einzelnen Bestandteile der Platine und die Vorgänge beim Lasern detaillierter beschrieben.

Die Aluminiumfolie kann aus den für Platinen üblichen Aluminiumlegierungen bzw. dem Aluminium mit dem üblichen Reinheitsgrad bestehen. Die Oberfläche kann glänzend oder matt sein, als Stärke können beispielsweise 50 µm angegeben werden, doch sind hier große Schwankungen möglich. Bevorzugt wird eine sogenannte "weiche" Aluminiumfolie, für den Fachmann auf dem Gebiete der Platinenherstellung ist dies ein geläufiger Begriff.

Auf der Außenseite der Aluminiumfolie, das ist die der koextrudierten Kunststoffschicht abgewandten Seite, befindet sich üblicherweise ein Aufdruck, dieser wird von der erfindungsgemäßen Ausgestaltung der Platine nicht berührt und berührt seinerseits die Erfindung nicht, er kann daher auf alle im Stand der Technik bekannten Arten aufgebracht werden, üblicherweise auf eine Schichte von Druckvorlack, und kann beispielsweise ein UV-Flexodruck sein.

Auf der der koextrudierten Kunststoffschicht zugewandten Seite kann eine Schicht aus Heißsiegellack, üblicherweise PVC-frei und bevorzugt farblos, aufgebracht sein, um die Stärke des Zusammenhaltes zwischen der Aluminiumfolie und der Kunststoffschichte auf das gewünschte Maß zu bringen. Gängige Werte für die verwendete Menge liegen im Bereich von etwa 6 g/m². Diese Heißsiegellackschichte ist nicht zwingend notwendig, einige wenige Versuche lassen den Fachmann erkennen, ob und in welchem Ausmaß sie bei der jeweiligen Anwendung benötigt wird.

Der bisher beschriebene Aufbau ist sowohl bei PE basierenden als auch bei PP basierenden koextrudierten, gegebenenfalls mehrlagigen, Schichten gleich. Im Folgenden werden verschiedentlich Prozentsätze angegeben, es handelt sich dabei immer um Gewichtsprozente, soferne nicht speziell andere Bezugsgrößen angegeben sind.

Wenn ein PE-basierendes Koextrudat verwendet wird, kann es gefüllt sein, beispielsweise mit Talk (z.B. CC7209 von Borealis), Kreide, TiO₂, oder anderen aus dem Stand der Technik bekannten Füllstoffen, es können Farbstoffe zugesetzt werden, die insbesondere auf die Farbe des späteren Füllgutes abgestimmt sind; Füllgehalte bis 40 % und mehr sind möglich. Als Talk kann z.B. Finntalc M05 SL verwendet werden. Es gibt auch "vorgefüllte Systeme, beispielsweise Maxithen HP 790101 von Gabriel Chemie, oder Carolen 252550 von Carova Compounding, die direkt dem Extruder zugeführt werden können.

Es können selbstverständlich auch ungefüllte PE Typen verwendet werden, wenn ihre rheologischen Eigenschaften für die Verarbeitung auf der zur Verfügung stehenden Beschichtungsanlage, insbesondere einer Breitschlitzdüse, geeignet sind. Dies ist für den Fachmann auf dem Gebiet der Extrusionstechnik in Kenntnis der Erfindung problemlos festzustellen. Geeignete MFI-Werte (Schmelzindex, beispielsweise nach DIN; 190°C, Belastung von 2,16 kg) liegen zwischen 2 und 10 g/10 min.
Beispiele für auf dem Markt erhältliche, brauchbare Produkte:
Escorene LD 252 von Exxon;
PG 7004 von Dow: WA 107672/01/014: 50 g;
PG 7008 von Dow;
CA 8200 von Borealis;
Bralen NA 7-25 von Slovnaft Petrochemicals.

Diese PE-Typen (im Regelfall PE-LD) können in reiner Form oder als Mischung eingesetzt werden. Zur Erhöhung der Steifigkeit kann PE-HD mit ähnlichem Fließverhalten beigesetzt werden, wenn zähere Mischungen benötigt werden, können auch kautschukartige Typen, sogenannte thermoplastische Elastomere (EPDM, etc.) zugesetzt werden. Auch die Zugabe von Polybutylen (etwa 8340 M oder DP 9217 von Basell oder EthylenCopolymeren wie EAA (Bezeichnung für Ethylen-Acrylatsäure-Polymer), EMA (Ethylen-Methacrylat-Copolymer) oder Ionomeren (Ethylen-Acrylsäurebasis, einzelne Säuregruppen sind durch Ionen ersetzt) im Ausmaß von bis zu 30 % ist möglich.

Wenn ein PP-basierendes Koextrudat verwendet wird, kann es ebenfalls gefüllt oder ungefüllt sein.

Ungefüllte Typen weisen bevorzugt einen MFI von 8 bis 22 g/10 min auf (Schmelzindex, beispielsweise nach DIN; 230°C, Belastung von 2,16 kg). In Frage kommen PP-Homopolymere, PP-Copolymere, verzweigte PP-Typen (sogenannte HMS-PP-Typen), Metocene, heterophasige PP-Typen, aber auch Mischungen, die in diesem Viskositätsbereich liegen, und sogenannte Blends. Zur Eigenschaftsverbesserung kann ein PE-Anteil zugefügt werden (z.B. WG 341 C von Borealis, das zu etwa 30 % PE enthält, oder auch ein anderes polyolefinbasierendes Material, z.B. Polybutylen). Die Eignung zur Verarbeitung zu flächigen Gebilden in Extrusionsanlagen kann im Zweifelsfall vom Fachmann auf dem Gebiet der Kunststoffextrusion leicht festgestellt werden, gegebenenfalls durch einige wenige Versuche im Labormaßstab. Ein eventuell vorhandener PE-Anteil, wie oben erwähnt, kann bei Platinen, die nicht sterilisiert werden, auch deutlich höher als die genannten 30 % sein.

Beispiele für auf dem Markt erhältliche, brauchbare Produkte:
WG 341C von Borealis;
Daploy WD 234 HMS von Borealis;
Hifax DKS 208 nat. von Basell;
Domolen 1011 S von Domo.

Beispiel für eine Mischung:
56 % WG341C mit 30 % WD 234 HMS und 14 % HG 420 FB (von Borealis).

Gefüllte Typen sind kommerziell erhältlich, z.B. WG 350C von Borealis, können aber selbstverständlich auch selbst gemischt werden, so hat sich eine Mischung von 80 % WG341 C mit 20 % VATPOL 265F65 (mit 60 % Füllstoff) von SILON bewährt.

Als Farben können übliche Farbbatches verwendet werden, so für Kaffebraun HP 820761 oder PP 821361 von Gabriel Chemie, für Weiß bietet sich das übliche TIO₂ an.

Sowohl bei PE Basis als auch bei PP Basis sind mehrschichtige Aufbauten der Koextrusionsschicht möglich und in vielen Fällen vorteilhaft. Dabei kann ein symmetrischer Aufbau für die Eigenschaften an der Breitschlitzdüse die Außenschichten auf die Ausbringung abstellen und die Innenschicht(en) auf die gewünschten mechanischen und oder thermischen Eigenschaften, es kann in diesem Fall, aber besonders bei asymmetrischem Aufbau, die von der Aluminiumfolie abgewandte Außenschicht auf die Natur des Materials des Bechers/Gefäßes, auf dessen Rand die Platine gesiegelt wird, Rücksicht nehmen.

So kann in letzterem Fall diese Schichte aus Appeel 20D745 von DuPont, gegebenenfalls mit 2 bis 5 % Gleitadditiv wie Conpol 20S2 von DuPont sein, um sowohl gegen PS als auch gegen PP Becher zu siegeln.

Im Falle eines symmetrischen Aufbaues (dabei kann aber die Grammatur einander entsprechender Schichten unterschiedlich sein), wie beispielsweise: PG7004 (PE ungefüllt) //CC7209 (PE gefüllt) // PG7004 kann die Steifigkeit und Elastizität des Gesamtfilmes gezielt beeinflusst werden. Eine andere Kombination, die sich in Versuchen bewährt hat, ist: PG7004 // Appeel 20D745 (EMA ungefüllt) oder Appeel 20D855 (EMA mit Füllstoff), beide von DuPont // PG7004. Statt EMA können auch Ionomere, z.B. Surlyn 1652-E verwendet werden.

### Praktisch brauchbare Zusammensetzungen waren weiters:

Bei PE-Basis: Dreischichtsystem, 70 µm: PG7004 14g // CC7209 49g // PG7004 7g.
Bei PP-Basis: Hifax DKS 208 nat 16g // WG350C 28g // Hifax DKS208 nat 6g; hier sind auch 22g //40g // 8g mit gutem Resultat möglich.

Als Laserquelle kann beispielsweise ein StarScribe CW der Carl Baasel Lasertechnik aus Stamberg, Deutschland, verwendet werden. Dieser CO₂ Laser ist insbesondere für das Ritzen von Folienlaminaten geeignet und weist eine Wellenlänge von 10,6 µm bei einer Leistung von 300 W, bei einigen Modellen auch 360 W, bei einigen Modellen auch Wellenlängen von 10,25 µm, auf. Das in Form eines endlosen Bandes vorliegende Platinenmaterial (meist in einer Breite von zwei Platinen versetzt nebeneinander) wird, mit der Kunststoffschichte dem Laser zugewandt und auf einer passenden Auflage gleitend, von einem Vorratswickel kommend, an diesem vorbeigezogen und auf einer Trommel aufgewickelt. Der Laserstrahl wird durch um zwei oder drei Achsen bewegliche Spiegel passend über die Oberfläche geführt.

Die Fokussierung des Strahls erfolgt bevorzugt auf einen Punkt knapp oberhalb der Aluminiumfolie, sodass die größte Intensität des Energieeintrags tief im Inneren der Kunststoffschichte (soweit die Bezeichnung "tief" bei den angegebenen Dicken überhaupt passend ist) liegt. Die Fokussierung selbst erreicht Durchmesser von 150 µm bis 350 µm, bevorzugt werden die kleinen Bereiche, die bis und bei ca. 210 µm liegen. Dadurch wird die Schwächung des Materials auf einen nur sehr schmalen Bereich konzentriert, überschüssige Energie wird durch die gut Wärme leitende Aluminiumfolie rasch und unschädlich abgeführt.

Als eine einfache, aber zuverlässige Faustregel kann gesagt werden, dass die Schwächung der Kunststoffschichte dann schon ausreichend aber noch nicht zu groß ist, wenn auf der Oberfläche der Aluminiumfolie nach dem Entfernen der Kunststoffschichte ein mit freiem Auge bei genauer Betrachtung erkennbarer linienförmiger Bereich mit (gegenüber der Umgebung) leicht erhöhter Reflexion besteht. Eine auffällige Linie deutet auf zu starken Energieeintrag hin, eine nicht bzw. auch bei erhöhter Aufmerksamkeit kaum zu erkennende Änderung auf zu geringen Energieeintrag. Diese Kennzeichnung ist zwar nicht wirklich quantifizierbar, doch widersetzt sich die optische Änderung einer objektiveren Angabe.

Die Geschwindigkeit des Auftreffpunktes des Laserstrahls auf der Oberfläche des Platinenmaterials liegt bei einigen mm/s bis zu einigen cm/s, bevorzugt von 5 mm/s bis zu 5 cm/s, abhängig von der Natur und Dicke der zu schwächenden Schichten und dem gewünschten Grad der Schwächung.

Der so erhaltene Einschnitt ist derart schmal, dass das Gut, auch wenn es in flüssiger Form vorliegt, nicht zum Aluminium vordringen kann. Auch wird durch den bis zum Abkühlen erfolgenden Verlagerungsprozess des geschmolzenen bzw. zumindest erweichten Kunststoffs der Störungsbereich zumindest am Grund wieder gefüllt, ohne dass dies zu einer Wiederherstellung der mechanischen Festigkeit führt.

Um die Folie beim Bewegen über die Auflage eben zu halten, kann die Auflage mit Öffnungen versehen sein, die mit einer Saugvorrichtung verbunden sind und so die Folie zufolge der Druckdifferenz gegen die definierte Oberfläche der Auflage saugt. Das richtige Maß des Unterdrucks kann vom Fachmann anhand einiger weniger Versuche in Abhängigkeit von der Foliengeschwindigkeit, Folienstärke und Qualität der erhaltenen Schwächungslinie festgestellt werden.

Durch diese Kombination von Materialien und deren Behandlung erreicht man das oben angegebene Ziel auch in großtechnischem Maßstab mit ausreichender Genauigkeit, Zuverlässigkeit und zu kaufmännisch akzeptablen Kosten.

Es wird angenommen, dass auch andere Laserarten in der Lage sind, passende Schwächungslinien herzustellen, doch hat bei den Versuchen der Anmelderin der CO₂-Laser die Besten Resultate gebracht.

Auf jeder einzelnen Platine wird so zumindest eine in sich geschlossene Schwächungslinie aufgebracht, die die spätere Trinköffnung definiert. Zusätzlich kann durch eine weitere Schwächungslinie eine weitere, dann bevorzugt kleinere Öffnung definiert werden, die entweder für den Luftzutritt beim Trinken oder zum Einstecken eines Trinkhalmes dient.

Eine in der Praxis bewährte Ausgestaltung betrifft eine Schlangenlinie, die sich im Bereich der Öffnungslasche um die kommende Siegelnaht "windet". Diese stellt sicher, dass das Öffnen und zugleich das Trennen der Kunststoffschichte von der Aluminiumfolie zuverlässig und sauber erfolgen. Ohne diese Maßnahme kommt es, besonders bei PP-basierenden Kunststoffschichten, nicht oder sehr mangelhaft zur Trennung der beiden Schichten.

Die Herstellung der Schwächungslinie mittels Laser ist auf der fertigen Platine leicht erkennbar, da nur beim Lasern die oben erläuterte optische Veränderung auf der Aluminiumschichte entsteht. Sowohl beim rein mechanischen als auch beim mechanischthermischen erzeugen der Schwächungslinie entsteht ein völlig anderes Bild der Schwächungslinie, vor allem ist diese deutlich breiter und legt merkliche Gebiete der Oberfläche der Aluminiumfolie frei.

Die Erfmdung ist nicht auf die beschriebenen Beispiele beschränkt, sondern kann verschiedentlich abgewandelt werden. So können insbesondere andere als die angegebenen Kunststoffe bzw. Kunststoffmischungen verwendet werden, wenn auch die Grundlagen, die PE- bzw. PP-basierenden Kunststoffschichten feststehen.

## Patentansprüche

1. Platine zum Verschließen eines Bechers entlang eines umlaufenden Siegelrandes, wobei die Platine zumindest eine Aluminiumfolie und eine, gegebenenfalls mehrlagige, auf die Aluminiumfolie koextrudierte Kunststoffschichte aufweist, wobei in der Kunststoffschichte eine in sich geschlossene Schwächungslinie vorgesehen ist, **dadurch gekennzeichnet, dass** die Kunststoffschichte entweder aus auf Polyethylen (PE) basierendem Kunststoff oder aus auf Polypropylen (PP) basierendem Kunststoff besteht und dass die Schwächungslinie mittels eines CO₂-Lasers in die Kunststoffschichte eingebracht worden ist.

2. Platine nach Anspruch 1, **dadurch gekennzeichnet, dass** sie eine Lasche zum Öffnen aufweist und dass in deren Bereich eine Schwächungslinie in Schlangenform um die Siegelnaht vorgesehen ist.

3. Platine nach Anspruch 1 oder 2, **dadurch gekennzeichnet, dass** sie zwischen der Aluminiumfolie und der koextrudierten Kunststoffschichte eine Schicht aus Heißsiegellack, bevorzugt PVC-frei und bevorzugt farblos, aufweist.

4. Platine nach einem der Ansprüche 1 bis 3, **dadurch gekennzeichnet, dass** die Kunststoffschichte mehrlagig ausgebildet ist.

5. Platine nach einem der Ansprüche 1 bis 3, mit einer auf PE basierenden Kunststoffschichte, **dadurch gekennzeichnet, dass** sie ein Dreischichtsystem mit etwa 70 µm Dicke ist, wobei die dem Gut zugewandte Schichte PG7004, mit 14g/m²; die mittlere Schichte CC7209 mit 49g/m² und die dem Aluminium zugewandte Schichte PG7004 mit 7g/m² ist.

6. Platine nach einem der Ansprüche 1 bis 3, mit einer auf PP basierenden Kunststoffschichte, **dadurch gekennzeichnet, dass** sie ein Dreischichtsystem mit etwa 70 µm Dicke ist, wobei die dem Gut zugewandte Schichte Hifax DKS 208 nat mit 16g/m², die mittlere Schichte WG350C mit 28g/m² und die dem Aluminium zugewandte Schichte Hifax DKS208 nat mit 6g/m² ist.

7. Verfahren zur Herstellung einer Platine nach einem der Ansprüche 1 bis 6, **dadurch gekennzeichnet, dass** das in Form eines endlosen Bandes vorliegende Platinenmaterial, mit der Kunststoffschichte dem Laser zugewandt und auf einer passenden Auflage gleitend, an diesem vorbeigezogen wird und dass der Laserstrahl auf einen Durchmesser von 150 µm bis 350 µm, bevorzugt ca. 210 µm fokussiert wird, und dass die Fokussierung des Strahls auf eine Stelle knapp oberhalb der Aluminiumfolie erfolgt.

8. Verfahren nach Anspruch 7, **dadurch gekennzeichnet, dass** die Wellenlänge des Lasers zwischen 10,2 µm und 10,8 µm liegt.

9. Verfahren nach Anspruch 7 oder 8, **dadurch gekennzeichnet, dass** der Laserstrahl eine Energie von etwa 300W aufweist.

10. Verfahren nach einem der Ansprüche 7 bis 9, **dadurch gekennzeichnet, dass** die Geschwindigkeit des Auftreffpunktes des Laserstrahls auf der Oberfläche des Platinenmaterials von 5 mm/s bis zu 5 cm/s, abhängig von der Natur und Dicke der zu schwächenden Schichten und dem gewünschten Grad der Schwächung, beträgt.
